(19) Europäisches Patentamt / European Patent Office / Office européen des brevets

(11) **EP 2 135 312 B1**

(12) **EUROPEAN PATENT SPECIFICATION**

(45) Date of publication and mention
of the grant of the patent:
**26.01.2011 Bulletin 2011/04**

(21) Application number: **08762855.8**

(22) Date of filing: **08.04.2008**

(51) Int Cl.:
*H01M 4/58* (2010.01)    *H01M 10/0525* (2010.01)
*C01B 25/45* (2006.01)    *H01M 4/02* (2006.01)

(86) International application number:
**PCT/IB2008/001522**

(87) International publication number:
**WO 2008/125984 (23.10.2008 Gazette 2008/43)**

(54) **ACTIVE ELECTRODE MATERIAL, METHOD OF MANUFACTURING THE SAME, AND LITHIUM-ION BATTERY USING SUCH AN ACTIVE ELECTRODE MATERIAL**

AKTIVES ELEKTRODENMATERIAL, VERFAHREN ZUR HERSTELLUNG DESSELBEN UND LITHIUMIONENBATTERIE MIT DERARTIGEM AKTIVEM ELEKTRODENMATERIAL

MATÉRIAU ACTIF D'ÉLECTRODE, SON PROCÉDÉ DE FABRICATION, ET PILE LITHIUM-ION UTILISANT UN TEL MATÉRIAU ACTIF D'ÉLECTRODE

(84) Designated Contracting States:
**DE FR**

(30) Priority: **13.04.2007 JP 2007105574**

(43) Date of publication of application:
**23.12.2009 Bulletin 2009/52**

(73) Proprietors:
• **Toyota Jidosha Kabushiki Kaisha**
**Toyota-shi, Aichi-ken 471-8571 (JP)**
• **Kyushu University,**
**National University Corporation**
**Higashi-ku**
**Fukuoka-shi**
**Fukuoka 812-8581 (JP)**

(72) Inventors:
• **OKADA, Shigeto**
**Higashi-ku, Fukuoka-shi**
**Fukuoka 812-8581 (JP)**
• **YAMAKI, Jun-ichi**
**Higashi-ku, Fukuoka-shi**
**Fukuoka 812-8581 (JP)**
• **ISONO, Motoshi**
**Toyota-shi**
**Aichi-ken 471-8571 (JP)**

(74) Representative: **Jackson, Martin Peter**
**J.A. Kemp & Co.**
**14 South Square**
**Gray's Inn**
**London WC1R 5JJ (GB)**

(56) References cited:
**EP-A- 1 180 811**    **EP-A- 1 195 836**
**EP-A- 1 684 370**    **JP-A- 2007 073 360**
**US-A1- 2004 206 938**

**Description**

BACKGROUND OF THE INVENTION

1. Field of the Invention

The invention relates to high capacity electrode active material which is mainly an amorphous iron-phosphate complex represented by $Li_xFePyO_z$, a manufacturing method of that electrode active material, and a lithium-ion battery to which that active electrode material has been applied.

2. Description of the Related Art

A secondary battery is known which charges and discharges by cations such as lithium ions traveling between electrodes. One classic example of such a secondary battery is a lithium-ion secondary battery. Material that can absorb and release lithium ions can be used for the electrode active material of such a secondary battery. One example of such material is carbonaceous material such as graphite which is an example of negative electrode active material. On the other hand, an example of positive electrode active material is an oxide which has lithium and a transition metal as constituent elements, such as lithium nickel oxide or lithium cobalt oxide (hereinafter, such an oxide may also be referred to as a "lithium-containing composite oxide"). Moreover, in recent years, chemical compounds having an olivine structure, e.g., chemical compounds represented by the general expression $LiMPO_4$ (M = Mn, Fe, Co, Cu, V), are promising for positive electrode active material due in part to their large theoretical capacity.

Meanwhile, Japanese Patent Application Publication No. 2005-158673 (JP-A-2005-158673) describes electrode active material which is mainly an amorphous metal-phosphate complex that has an olivine structure. With the electrode active material that is mainly a metal-phosphate complex, an amorphous body can be synthesized from an inexpensive metal oxide at an extremely low cost and in a short period of time by rapid cooling compared with a crystalline body of related art. What is more, the resultant amorphous body seems to display the same battery properties as a crystalline body.

US 2004/206938 A1 discloses alkali- metal containing oligophosphate compounds of formula $A_aM_bX_cO_{(3c+1)}$ (I), with A = alkali metal(s); a = 0-6; M = redox active element(s); b = 1-4; X = P, As, Sb, Si, Ge, V, and/or S; and c = 2-5 (wherein A, M, X, a, b and c are selected to maintain electroneutrality of the material), and the use thereof as electrode active materials for electrochemical cells used in a battery. Described is for example the preparation of a preferred compound of formula $Li_2FeP_2O_7$ (see Example 1).

JP 2007 073360 A discloses a process for the manufacture of an electrode active material for non-aqueous secondary battery, involving melting and fusing a raw material mixture to obtain a lithium transition metal fluorophosphate of formula $Li_2MePO_4F$ wherein Me is a transition metal element chosen from Fe, Co, Mn, and Ni.

EP-A-1 195 836 discloses a non-aqueous electrolyte secondary cell including a cathode having a layer of a cathode active material containing a compound of olivinic structure represented by the general formula $Li_xFe_{1-y}M_yPO_4$, where M is at least one element selected from the group consisting of Mn, Cr, Co, Cu, Ni, V, Mo, Ti, Zn, Al, Ga, Mg, B and Nb, with $0,05 \leq x \leq 1,2$ and $0 \leq y \leq 0,8$, an anode having a layer of an anode active material and a non-aqueous electrolyte.

EP-A-1 180 811 discloses a non-aqueous electrolyte secondary cell including a cathode containing a compound expressed by a general formula $A_xM_yPO_4$, wherein A represents an alkali metal, preferably Li, and M represents a transition element selected from the group consisting of Co, Ni, Fe, Mn, Cu, Mg, Zn, Ca, Cd, Sr and Ba, with $0 < x \leq 2$ and $1 \leq y \leq 2$); an anode containing sintered carbon material and a non-aqueous electrolyte solution.

However, with electrode active material that is mainly an amorphous metal-phosphate complex represented by $Li_xFePyO_z$, the optimal range of the relative proportions of x, y, and z that would increase the capacity is not known so the capacity is small.

SUMMARY OF THE INVENTION

This invention thus provides high capacity electrode active material that is mainly an amorphous iron-phosphate complex represented by $Li_xFePyO_z$.

A first aspect of the invention relates to electrode active material which is represented by $Li_xFePyO_z$ (where x and y are values which independently satisfy $2 < x \leq 2.5$ and $1.5 \leq y \leq 2$, respectively, z = (x + 5y + valence of iron) / 2 to satisfy stoichiometry, and the valence of the iron is 2 or 3) and has an amorphous iron-phosphate complex as a main constituent.

According to this first aspect of the invention, having the relative proportions of the electrode "active material which is mainly an amorphous" iron-phosphate complex represented by $Li_xFePyO_z$ be $2 < x \leq 2.5$, $1.5 \leq y \leq 2$, and z = (x + 5y + valence 2 or 3 of iron) / 2 enables the electrons and lithium ions to move easily which is necessary to achieve high capacity, thereby enabling high capacity electrode active material to be obtained.

A second aspect of the invention relates to a manufacturing method for electrode active material, which includes melt mixing raw material composition that includes raw materials that make up $Li_xFeP_yO_z$ (where x and y are values which independently satisfy $2 < x \leq 2.5$ and $1.5 \leq y s 2$, respectively, z = (x + 5y + valence of iron) / 2 to satisfy stoichiometry, and the valence of iron is 2 or 3); and rapidly solidifying from a molten state the raw material composition that was melt mixed.

According to this second aspect of the invention, having the relative proportions of the electrode active material which is mainly an amorphous iron-phosphate complex represented by $Li_xFeP_yO_z$ be $2 < x \leq 2.5$, 1.5 s y s 2, and z = (x + 5y + valence 2 or 3 of iron) / 2 enables the electrons and lithium ions to move easily which is necessary to achieve high capacity, thereby enabling high capacity electrode active material to be obtained.

A third aspect of the invention relates to a lithium-ion secondary battery that includes a positive electrode layer that includes the electrode active material according to the first aspect of the invention as positive electrode active material, a negative electrode layer that includes negative electrode active material, and a nonaqueous electrolyte.

According to this third aspect of the invention, a high capacity lithium-ion secondary battery can be obtained.

This invention enables electrode active material that is mainly an amorphous iron-phosphate complex represented by $Li_xFeP_yO_z$ and which has a high capacity to be obtained.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG 1 is a graph showing the specific capacitances (mAh/g) of nonaqueous electrolyte secondary batteries using the electrode active material obtained from Examples 1 and 2 and Comparative examples 1 and 2 with respect to Li/Fe (molar ratio); and

FIG 2 is a graph showing the specific capacitances (mAh/g) of nonaqueous electrolyte secondary batteries using the electrode active material obtained from Examples 3 and 4 and Comparative examples 3 and 4 with respect to P/Fe (molar ratio).

DETAILED DESCRIPTION OF THE EMBODIMENTS

First, the electrode active material according to an example embodiment of the invention will be described. The electrode active material according to the example embodiment of the invention is mainly an amorphous iron-phosphate complex represented by $Li_xFeP_yO_z$ (where x and y are values which independently satisfy $2 < x s 2.5$ and $1.5 \leq y \leq 2$, respectively, and z = (x + 5y + valence of iron) / 2 to satisfy stoichiometry, and the valance of iron is 2 or 3).

According to this example embodiment of the invention, having the relative proportions of the electrode active material which is mainly an amorphous iron-phosphate complex represented by $Li_xFeP_yO_z$ be $2 < x \leq 2.5$, $1.5 \leq y \leq 2$, and z = (x + 5y + valence 2 or 3 of iron) / 2 enables the electrons and lithium ions to move easily which is necessary to achieve high capacity, thereby enabling high capacity electrode active material to be obtained. Hereinafter the electrode active material of the example embodiment of the invention will be described in more detail.

The iron-phosphate complex in this example embodiment of the invention is represented by the following General expression (1).

$$Li_xFeP_yO_z \qquad (1)$$

where x and y are values which independently satisfy $2 < x \leq 2.5$ and $1.5 \leq y s 2$, respectively, and z = (x + 5y + valence of iron) / 2 to satisfy stoichiometry, and the valance of iron is 2 or 3.

In this expression, if x and y are values within the composition range described above, electrode active material that is mainly an amorphous iron-phosphate complex represented by $Li_xFeP_yO_z$ and which has a high capacity can be obtained. The reason for this is thought to be as follows. In order to improve the capacity in the electrode active material, it is necessary that not only Li be easily dispersed, but also that electrons be able to move easily. That is, in this electrode active material, when x (= Li/Fe (molar ratio)) that represents the ratio of Li is within the range described above, the amount of Li with respect to Fe increases so Li disperses easier. Also, P (phosphorous) may interfere with the movement of electrons so by keeping y (= P/Fe (molar ratio)) which represents the ratio of P within the range described above, the amount of P with respect to Fe becomes less. As a result, the interference of the movement of electrons caused by P is suppressed so the electrons can move easier. As described above, x and y in this example embodiment of the invention do satisfy the composition range described above. However, it is preferable that they be within the ranges of $2.25 \leq x \leq 2.5$ and $1.5 \leq y \leq 1.75$, respectively.

Also, in General expression $Li_xFeP_yO_z$ (1), the value of z is a value that is determined by the valence of iron and the values of x and y to satisfy stoichiometry, and is expressed by the following Equation (2).

$$z = (x + 5y + \text{valence 2 or 3 of iron}) / 2 \ldots (2)$$

In Equation (2), the valence of iron is 2 when the iron-phosphate complex is reacted in an inert atmosphere or a reducing atmosphere (simply referred to as a "non-oxidizing environment" in this specification), and is 3 when it is reacted in an oxidizing atmosphere. Therefore, the iron takes on either a valence of 2 or 3 depending on the atmosphere. In this case, z can more specifically be a value that is within the composition range of $5.75 \leq z \leq 7.75$. In this invention, the atmosphere is preferably a non-oxidizing atmosphere, i.e., the valence of iron is preferably 2. In this case, z is a value within the composition range of $5.75 \leq z \leq 7.25$.

In this example embodiment of this invention, the iron-phosphate complex with the composition of the foregoing General expression (1) $Li_xFeP_yO_z$ (where x and y are values which independently satisfy $2 < x \leq 2.5$ and $1.5 s y \leq 2$, respectively, and z = (x + 5y + valence of iron) / 2 to satisfy stoichiometry, and the valance of iron is 2 or 3) is an amorphous material. The amorphous iron-phosphate complex may be amorphous to the extent that one or two or more of the following conditions are satisfied, for example. (1) the average crystallite size is equal to or less than approximately 1000 Angstrom (preferably equal to or less than approximately 100 Angstrom, and more preferably equal to or less than 50 Angstrom); (2) the specific gravity of the iron-phosphate complex is large at equal to or greater than approximately 3% (and more preferably equal to or greater than approximately 5%) compared to the specific gravity (theoretical value) when the iron-phosphate complex is completely crystalline; and (3) no peak which supports the iron-phosphate complex being crystalline can be observed in an X-ray diffraction pattern. That is, a classic example of the iron-phosphate complex described here is mainly a lithium iron-phosphate complex that satisfies one or two or more of the foregoing conditions (1) to (3). In the invention, the iron-phosphate complex is preferably a lithium iron-phosphate complex that satisfies at least condition (3). Incidentally, the X-ray pattern can be obtained using an X-ray diffractometer (XRD) (model number Rigaku RINT 2100 HLR/PC) that may be obtained from Rigaku Corporation, for example. Here, the electrode active material that is mainly an amorphous metal-phosphate complex refers to electrode active material having enough portions that are amorphous to on the whole be regarded as having the amorphous characteristics of (1) to (3) above even if there are crystalline portions in the electrode active material.

The method of manufacturing the foregoing electrode active material is not particularly limited as long as the electrode active material described is able to be obtained. For example, the electrode active material of the invention may be manufactured according to an amorphising process that rapidly cools a melt having a $Li_xFeP_yO_z$ composition.

This amorphising process will now be described. The amorphising process is a process for obtaining an amorphous iron-phosphate complex by rapidly cooling a melt having a $Li_xFeP_yO_z$ composition.

The method for rapidly cooling the melt used in this process (i.e., the melt rapid cooling method) is a method for amorphising a metal complex by rapidly solidifying the metal complex from a molten state. For example, a metal complex in a molten state is rapidly solidified by being put into a low temperature medium (such as ice water) so that it solidifies rapidly. More specifically, the single-roll method for rapidly cooling melt may be used, for example. This amorphising method may be repeated two or more times as necessary.

Normally in order to have the amorphous iron-phosphate complex contain Fe having a valence of 2, this process is preferably performed in a non-oxidizing atmosphere such as an inert gas atmosphere of, for example, argon gas or nitrogen ($N_2$), or an atmosphere that includes a reducing gas such as hydrogen gas. Of these, an inert gas atmosphere of argon gas is preferable.

The melt rapid cooling method includes a step of rapidly solidifying from a molten state a mixture including Li raw material (such as a Li compound), Fe raw material (such as an Fe oxide), and P raw material (such as a phosphate compound), which corresponds to the $Li_xFeP_yO_z$. This method may preferably be applied to a lithium iron-phosphate complex or the like.

The Li raw material used in this step may be one or two or more kinds of Li compounds. The Li compound may be, for example, $Li_2O$, $LiOH$, or $Li_2CO_3$. Of these, $Li_2O$ is preferable. Using this kind of lithium compound enables electrode active material corresponding to a state in which lithium has been absorbed beforehand to be obtained. As a result, the irreversible capacity can be reduced. In addition, the melting point of the mixture can be reduced by selecting a lithium compound that can function as a flux of fusing agent which makes it easier to fuse the materials.

Also, the Fe raw material used in this step may be one or two or more kinds of Fe oxides. The Fe oxide may be, for example, $FeO$ or $Fe_2O_3$ or the like, $FeO$ being the more preferable.

Also, the P raw material used in this step may be one or two or more kinds of phosphorous compounds. The phosphorous compound may be, for example, phosphorous oxide or phosphorous ammonium salt or the like, $P_2O_5$ being preferable.

The average particle diameter and particle diameter distribution and the like of the raw materials used in this step are not particularly limited. Also, generally the raw materials are preferably relatively uniformly mixed, and more preferably almost uniformly mixed. However, the raw material composition is melted once so even if it is not that uniform, it is still possible to manufacture electrode active material with sufficient uniformity for practical use. In this way, the method used in this example embodiment differs from the solid reaction method of the related art in that it suppresses the effects of the nature and uniformity of the raw material composition on the product material and the manufacturing conditions are easy to control.

The electrode active material according to this example embodiment of the invention may be used, for example, as positive electrode active material of a high voltage nonaqueous electrolyte secondary battery which will now be described in detail.

The nonaqueous electrolyte secondary battery is a nonaqueous electrolyte secondary battery that has a positive electrode containing the electrode active material, a negative electrode containing negative electrode active material, and a nonaqueous electrolyte. The nonaqueous electrolyte secondary battery is advantageous in that it can have greater capacity even when used with a high potential. Hereinafter, the reason why the nonaqueous electrolyte secondary battery has this kind of advantage will be described. The nonaqueous electrolyte secondary battery is able to realize greater capacity by using the electrode active material described above as the positive electrode active material. That is, using the foregoing electrode active material having a composition range that not only facilitates the dispersion of Li but also facilitates the movement of electrons, both of which are necessary to improve the capacity, as positive electrode active material improves the specific capacitance such that a nonaqueous electrolyte secondary battery can be obtained which has superior charging and discharging characteristics in which greater capacity is possible even when used with a high potential. Hereinafter, the nonaqueous electrolyte secondary battery according to the example embodiment of this invention will be described in detail for each structure.

First, the positive electrode used in the high voltage nonaqueous electrolyte.secondary battery will be described. This positive electrode at least has the electrode active material described above and also normally has a binder to hold the electrode active material.

Any well-known binder may be used. More specifically, the binder may be, for example, polyvinylidene-fluoride (PVDF), polytetrafluoroethylene (PTFE), polyvinylidene-fluoride - hexafluoropropylene copolymer (PVDF - HFP), a fluorine-containing resin such as fluoro-rubber, or a thermoplastic resin such as polypropylene or polyethylene. Also, the content of the binder of the positive electrode layer is, for example, within a range of 1 to 10 percent by mass, and preferably within a range of 3 to 7 percent by mass.

Also, the positive electrode may contain an additive in addition to the positive electrode active material and the binder. A conductive agent, for example, may be used as the additive. More specifically, carbon black, acetylene black, ketjen black, or black lead or the like may be used as the conductive agent.

Next, the negative electrode used in the high voltage nonaqueous electrolyte secondary battery will be described. When the foregoing electrode active material is used as the positive electrode of the battery, a metal such as lithium (Li), natrium (Na), magnesium (Mg), aluminum (Al), or an alloy thereof, or carbon material that can absorb and release cations, or the like may be used as negative electrode active material for the counter electrode to the positive electrode. Furthermore, the negative electrode also normally has a binder to hold the negative electrode active material.

Examples of the binder include polyvinylidene-fluoride (PVDF) and styrene-butadiene rubber polymer (SBR), polyvinylidene-fluoride (PVDF) being the more preferable.

Further, the negative electrode may also contain an additive in addition to the negative electrode active material and the binder. A conductive agent, for example, may be used as the additive. More specifically, carbon black, acetylene black, ketjen black, or black lead or the like may be used as the conductive agent.

The nonaqueous electrolyte used in the high voltage nonaqueous electrolyte secondary battery may include a nonaqueous solvent and a compound (support electrolyte) that contains cations that can be inserted into and removed from electrode active material. The nonaqueous solvent of the nonaqueous electrolyte may be any of a variety of types of aprotic solvents such as a carbonate, ester, ether, nitrile, sulfone, or lactone type. Examples include propylene carbonate; ethylene carbonate; diethyl carbonate; dimethyl carbonate; ethyl methyl carbonate; 1, 2-dimetboxyethane; 1, 2-diethoxyethane; acetonitrile; propionitrile; tetrahydrofuran; 2-methyltetrahydrofuran; dioxane; 1, 3-dioxolan; nitromethane; N, N-dimethylformamide; dimethylsulfoxide; sulfolane; and $\gamma$-butyrolactone. Only one type or a mixture of two or more types of nonaqueous solvent selected from among these kinds of nonaqueous solvents may be used. Also, a compound that includes cations that are inserted into/removed from the electrode active material may be used as the support electrolyte that constitutes the nonaqueous electrolyte. For example, with a lithium-ion secondary battery, one or two or more types of lithium compounds (lithium salts) such as $LiPF_6$, $LiBF_4$, $LiN(CF_3SO_2)_2$, $LiCF_3SO_3$, $LiC_4F_9SO_3$, $LiC(CF_3SO_2)_3$, and $LiClO_4$ may be used.

The nonaqueous electrolyte secondary battery may be any of a variety of shapes. For example, it may be coin-shaped, laminated (stacked), or cylindrical.

Also, the nonaqueous electrolyte secondary battery can be used with high voltage, the range of the maximum voltage being, for example, within 1.5 to 5 V, preferably within 2 to 4.75 V, and more preferably within 2.5 to 4.5 V.

The purpose for which the nonaqueous electrolyte secondary battery is used is not particularly limited. For example, the nonaqueous electrolyte secondary battery may be used in an automobile.

Incidentally, the invention is not limited to the foregoing example embodiment. The foregoing example embodiment simply illustrates an example. Other examples having substantially the same structure as the technical ideas described within the scope of the claims for patent of the invention and displaying the same operation and effects are also included within the technical scope of the invention.

Hereinafter, the invention will be described in even more detail with the following examples.

[Example 1]

$Li_2O$ as the Li raw material, FeO as the Fe raw material, and $P_2O_5$ as the P raw material were mixed together at a molar ratio of Li : Fe : P = 2.25 : 1 : 1.9 (Li/Fe = 2.25 and P/Fe = 1.9). This mixture was then melted for 1 minute at 1200°C in an Ar atmosphere and then rapidly cooled with a Cu roll using a single-roll rapid cooling apparatus to obtain electrode active material represented by $Li_xFeP_yO_z$ (where x = 2.25 and y = 1.9).

[Example 2]

Electrode active material was prepared as it was in Example 1 described above except for that the molar ratio of Li : Fe : P was 2.5 : 1 : 1.9 (Li/Fe = 2.5 and P/Fe = 1.9), such that electrode active material represented by $Li_xFeP_yO_z$ (where x = 2.5 and y = 1.9) was obtained.

[Comparative example 1]

Electrode active material was prepared as it was in Example 1 described above except for that the molar ratio of Li : Fe : P was 1.5 : 1 : 1.9 (Li/Fe = 1.5 and P/Fe = 1.9), such that electrode active material represented by $Li_xFeP_yO_z$ (where x = 1.5 and y = 1.9) was obtained.

[Comparative example 2]

Electrode active material was prepared as it was in Example 1 described above except for that the molar ratio of Li : Fe : P was 2 : 1 : 1.9 (Li/Fe = 2 and P/Fe = 1.9), such that electrode active material represented by $Li_xFeP_yO_z$ (where x = 2 and y = 1.9) was obtained.

[Example 3]

Electrode active material was prepared as it was in Example 1 described above except for that the molar ratio of Li : Fe : P was 2.05: 1 : 2 (Li/Fe = 2.05 and P/Fe = 2), such that electrode active material represented by $Li_xFeP_yO_z$ (where x = 2.05 and y = 2) was obtained.

[Example 4]

Electrode active material was prepared as it was in Example 1 described above except for that the molar ratio of Li : Fe : P was 2.05: 1 : 1.5 (Li/Fe = 2.05 and P/Fe = 1.5), such that electrode active material represented by $Li_xFeP_yO_z$ (where x =2.05 and y = 1.5) was obtained.

[Comparative example 3]

Electrode active material was prepared as it was in Example 1 described above except for that the molar ratio of Li : Fe : P was 2.05 : 1 : 3 (Li/Fe = 2.05 and P/Fe = 3), such that electrode active material represented by $Li_xFeP_yO_z$ (where x = 2.05 and y = 3) was obtained.

[Comparative example 4]

Electrode active material was prepared as it was in Example 1 described above except for that the molar ratio of Li : Fe : P was 2.05 : 1 : 2.5 (Li/Fe = 2.05 and P/Fe = 2.5), such that electrode active material represented by $Li_xFeP_yO_z$

(where x = 2.05 and y = 2.5) was obtained.

Next, the crystallinity of the electrode active materials represented by $Li_xFeP_yO_z$ obtained from Examples 1 to 4 and Comparative examples 1 to 4 were evaluated by X-ray diffraction under the following conditions: Apparatus used: Rigaku, RAD-X; X-ray: CuKα, 40 kV, 40 mA; scan range: 2 θ = 10° to 80°. After evaluating the electrode active materials obtained from Examples 1 to 4 and Comparative examples 1 to 4 using X-ray diffraction, only X-ray diffuse scattering specific to amorphous material could be seen in all of the electrode active materials. Therefore all of the obtained electrode active materials were confirmed to be amorphous, no crystalline material was confirmed. Incidentally, amorphising was not possible when Li/Fe (molar ratio) was greater than 2.5 and the P/Fe (molar ratio) was less than 1.5. The range in which amorphising was possible was Li/Fe (molar ratio) ≤ 2.5 and P/Fe (molar ratio) ≥ 1.5.

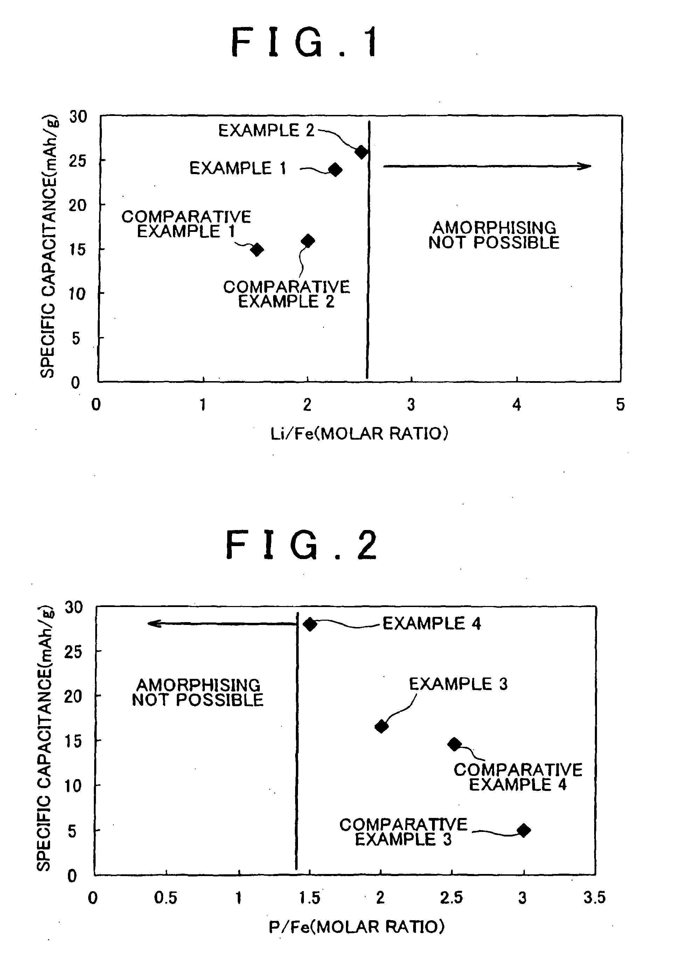

Test cells were manufactured using the foregoing electrode active materials represented by $Li_xFeP_yO_z$ that were obtained by Examples 1 to 4 and Comparative examples 1 to 4, and the charging and discharging characteristics of each were evaluated. That is, a sample of the electrode active material as the electrode active material, acetylene black as the conductive agent, and polytetrafluoroethylene (PTFE) as the binder were mixed together such that the mass ratio of electrode active material to conductive agent to binder was 70 : 25 : 5 (percent by mass). A test electrode was then manufactured by pressing this mixture onto SUS (stainless steel) mesh so that it was affixed thereto. Metal Li was used as the counter electrode and a polyethylene (PE) separator (Ube Industries, Ltd.) was used for the separator. Also, for the electrolyte solution, a mixture was used in which lithium hexafluorophosphate ($LiPF_6$) as a supporting salt was mixed at a concentration of 1 mol/L in with a mixed solvent with a volume ratio of 3 : 7 of ethylene carbonate (EC) and diethyl carbonate (DEC). The test coin cells were manufactured using these constituent elements. Charging and discharging with a current value of 0.1 (mA / $cm^2$) within a voltage range of 2.5 to 4.5 V was then performed with these test cells and the specific capacitance of each was measured. The specific capacitances of Examples 1 and 2 and Comparative examples 1 and 2 having compositions in which P/Fe (molar ratio) was fixed at 1.9 and Li/Fe (molar ratio) was changed in the General expression $Li_xFeP_yO_z$ are shown in FIG 1. The specific capacitances of Examples 3 and 4 and Comparative examples 3 and 4 having compositions in which P/Fe (molar ratio) was fixed at 2.05 and Li/Fe (molar ratio) was changed in the General expression $Li_xFeP_yO_z$ are shown in FIG 2.

As shown in FIG 1, in Examples 1 and 2 in which the value of Li/Fe (molar ratio) is greater than 2, the specific capacitances were 24 (mAh/g) and 26 (mAh/g), respectively. These are larger than the specific capacitances in Comparative examples 1 and 2, in which the value of Li/Fe (molar ratio) is equal to or less than 2, which were 15 (mAh/g) and 16 (mAh/g), respectively.

Also, as shown in FIG 2, in Examples 3 and 4 in which the value of P/Fe (molar ratio) is equal to or less than 2, the specific capacitances were 16 (mAh/g) and 28 (mAh/g), respectively. These are larger than the specific capacitances in Comparative examples 3 and 4, in which the value of P/Fe (molar ratio) is greater than 2, which were 4 (mAh/g) and 14 (mAh/g), respectively.

As is evident from these results, high capacity amorphous electrode active material was able to be obtained by having the range of the relative proportions of x (= Li/Fe (molar ratio)) and y (= P/Fe (molar ratio)) in the iron-phosphate complex represented by $Li_xFeP_yO_z$ be within 2 < x s 2.5 and 1.5 s y s 2, respectively

**Claims**

1. Electrode active material which is represented by $Li_xFeP_yO_z$ and has an amorphous iron-phosphate complex as a main constituent, **characterized in that** x and y are values which independently satisfy 2 < x ≤ 2.5 and 1.5 ≤ y ≤ 2, respectively; z = (x + 5y + valence of iron) / 2 to satisfy stoichiometry; and the valence of the iron is 2 or 3.

2. A manufacturing method for electrode active material, **characterized by** comprising:

   melt mixing raw material composition that includes raw materials that make up $Li_xFeP_yO_z$ (where x and y are values which independently satisfy 2 < x s 2.5 and 1.5 ≤ y ≤ 2, respectively, z = (x + 5y +valence of iron) / 2 to satisfy stoichiometry, and the valence of iron is 2 or 3); and
   rapidly solidifying from a molten state the raw material composition that was melt mixed.

3. A lithium-ion secondary battery **characterized by** comprising:

   a positive electrode layer that includes the electrode active material according to claim 1 as pdsitive electrode active material;
   a negative electrode layer that includes negative electrode active material; and
   a nonaqueous electrolyte.

**Patentansprüche**

1. Aktives Elektrodenmaterial, das durch $Li_xFeP_yO_z$ dargestellt wird und als Hauptbestandteil einen amorphen Eisen-Phosphat-Komplex aufweist, **dadurch gekennzeichnet, dass** x und y Werte sind, die unabhängig voneinander jeweils $2 < x \leq 2{,}5$ und $1{,}5 \leq y \leq 2$ erfüllen; $z = (x + 5y + \text{Valenz von Eisen}) / 2$, um eine Stöchiometrie zu erfüllen; und die Valenz von Eisen 2 oder 3 ist.

2. Herstellungsverfahren für ein aktives Elektrodenmaterial, **dadurch gekennzeichnet, dass** es folgende Schritte beinhaltet:

   Schmelzen und Vermischen einer Rohmaterialzusammensetzung, die Rohmaterialien beinhaltet, die sich aus $Li_xFeP_yO_z$ zusammensetzen (wobei x und y Werte sind, die die unabhängig voneinander jeweils $2 < x \leq 2{,}5$ und $1{,}5 \leq y \leq 2$ erfüllen; $z = (x + 5y + \text{Valenz von Eisen}) / 2$, um eine Stöchiometrie zu erfüllen, und die Valenz von Eisen 2 oder 3 ist; und

   rasches Verfestigen aus einem geschmolzenen Zustand der Rohmaterialzusammensetzung, die einem Schmelzen und Vermischen unterzogen worden war.

3. Sekundäre Lithiumbatterie, **dadurch gekennzeichnet, dass** sie aufweist:

   eine positive Elektrodenschicht, die das aktive Elektrodenmaterial nach Anspruch 1 als ein aktives Material für eine positive Elektrode beinhaltet;
   eine negative Elektrodenschicht, die ein aktives Material für eine negative Elektrode beinhaltet; und
   einen nichtwässrigen Elektrolyten.

**Revendications**

1. Matière active d'électrode qui est représentée par $Li_xFeP_yO_z$ et qui présente un complexe de fer-phosphate amorphe comme constituant principal, **caractérisée en ce que** x et y sont des valeurs qui satisfont indépendamment $2 < x \leq 2{,}5$ et $1{,}5 \leq y \leq 2$ respectivement ; $z = (x + 5y + \text{valence du fer})/2$ pour satisfaire la stoechiométrie ; et la valence du fer est égale à 2 ou à 3.

2. Procédé de fabrication d'une matière active électrode, **caractérisé en ce qu'**il comprend les étapes consistant :

   à mélanger à l'état de fusion une composition de matière première qui comprend les matières premières qui constituent $Li_xFeP_yO_z$ (où x et y sont des valeurs qui satisfont indépendamment $2 < x \leq 2{,}5$ et $1{,}5 \leq y \leq 2$, respectivement, $z = (x + 5y + \text{valence du fer})/2$ pour satisfaire la stoechiométrie, et la valence du fer est égale à 2 ou à 3) ; et
   à solidifier rapidement à partir d'un état de fusion la composition de matière première qui a été mélangée à l'état de fusion.

3. Accumulateur secondaire aux ions lithium **caractérisé en ce qu'**il comprend :

   une couche d'électrode positive qui inclut la matière active d'électrode selon la revendication 1 comme matière active d'électrode positive ;
   une couche d'électrode négative qui inclut une matière active d'électrode négative ; et
   un électrolyte non aqueux,

# FIG.1

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005158673 A
- US 2004206938 A1
- JP 2007073360 A
- EP 1195836 A
- EP 1180811 A